# EUROPEAN PATENT APPLICATION

(11) **EP 3 709 239 A1**
(43) Date of publication of application: **16.09.2020**
(21) Application number: 19162963.3
(22) Date of filing: 14.03.2019
(51) Int. Cl.: G06Q 10/08, B64F 1/36, G06Q 50/30

(54) **AUTOMATED RE-EXAMINATION OF UNACCOMPANIED HOLD BAGGAGE IN AN AIRPLANE**

(71) Applicant: Siemens Aktiengesellschaft, 80333 München (DE)
(72) Inventor: ROCHA, Rui, 2660-530 São Julião do Tojal (PT); PINTO, Antonio, 2710-190 Sintra (PT); SEQUEIRA, Rui, 2765-132 Estoril (PT)
(74) Representative: Maier, Daniel Oliver

(57) **Abstract**

The invention relates to a method and a system for an automated re-examination of unaccompanied hold baggage. The method comprises the following steps: First an according system is activated, wherein at least one digital interface of the system is operated, which allows an interaction from the system with at least one IT system of the airport. The receipt of a request of a re-examination of hold baggage from the at least one IT system of the airport starts the core steps of the method. During this procedure, by means of a re-evaluation of at least one piece of information about the particular piece of luggage, an automated routine is finally initiated, which at the end enables an automated decision-making aid, whether an unaccompanied hold baggage can stay on the airplane or has to be off loaded from the airplane.

## Description

The invention relates to a method and a system for an automated re-examination of unaccompanied hold baggage in an airplane.

In the air transportation, passengers and their baggage are transported between the respective airports. The passengers at the airports are offered two different options to have their baggage transported by the same flight. These two different ways to transport the personal belongings are related to hand baggage and the hold baggage. In other words, it is possible for a passenger to use two different ways to transport his own belongings: using cabin or hold baggage. Both options must comply with the regulations in place regarding the list of prohibited articles and other security measures. In the European Union these regulations are summarized in detail in the Commission Regulation (EU = European Union) N° 185/2010.

Before a passenger checks physically into the airplane, the hold baggage is already prepared for departure in parallel according to the respective check-in routine of the airport. For example, this check in routine involves creating screening images of each item of hold baggage. Accordingly, the passenger transfers his baggage for some time prior to the actual departure time of the flight to the airline, so that it can then be transported to the corresponding aircraft according to the check-in routine of the airport in order to be stowed there with the other hold baggage from other passengers.

Regarding hold baggage, before the deployment of the Commission Regulation (EU) N° 2015/1998 of 5 November 2015, if the passenger did not show up at the boarding gate, then his hold baggage could not travel unaccompanied and had to be immediately unloaded from the aircraft. These unload operations not only cause an undesired increase in operating costs, but also often lead to delays, which are also associated with corresponding additional costs for the airline.

In this context, the following routine or a similar procedure at the airport is currently being carried out by the respective airline. When a boarding gate closes, airlines check for no-show passengers, and request ground handling staff to unload the respective baggage from the plane.

This new EU regulation, along with the annexed Commission Decision C (2015) 8005, is now enabling unaccompanied hold baggage to travel without its passenger when the following points can be processed:
- The airline carrier assures the baggage has previously been screened by an EDX (EDX = Energy-dispersive X-ray spectroscopy) according to, at least, the ECAC (ECAC = European Civil Aviation Conference) standard 2; and
- The screening images are reexamined by one security operator if it was screened by an ECAC standard 3 EDX or by two different security operators, in an independent way, if it was screened by an ECAC standard 2 EDX; and
- The airline carrier performs an adequate passenger's risk assessment.
In other words, the current routine explained above does not differ between baggages, which potentially could travel unaccompanied, and baggages, which have to be off loaded. The request to ground handling staff to unload the respective baggage from the plane is performed, without knowing if it met the requirements to continue on the plane and avoid unnecessary time spent to find and unload baggage. The unnecessary actions cause additional costs, not only directly linked to the accompanied operation routines but also in terms of costs due to delays.

It is therefore one object of the presented invention to provide a method and a system, which reduces costs and accelerates operations connected to a reexamination process of unaccompanied hold baggage on a timely manner while taking into account existing systems and which complies the respective legislation.

The method for an automated re-examination of unaccompanied hold baggage in an airplane according to the invention basically comprises the following steps: Activating a system for re-examination of unaccompanied hold baggage in an airplane. Followed by operating at least one digital interface of the system, which allows an interaction from the system with at least one IT system of the airport. A receipt of request of a re-examination over at least one specific item of hold baggage from the at least one IT system of the airport starts the core steps of the method. After the receipt of the above-mentioned request, automatically an assignment routine over the at least one specific item of hold baggage at the at least one IT system of the airport is triggered. Automatically a result from this assignment routine is received. Depending on the result of the assignment routine, either a request over at least one information attribute of the specific item of hold baggage to the at least one IT system of the airport is triggered or an information to the at least one IT system of the airport is provided that the at least one specific item of hold baggage needs to be off loaded from the airplane and triggering a termination of the method is accomplished. After receiving the at least one information attribute of the item of hold baggage, it is automatically provided to a corresponding re-examination routine from the airport. Hereafter a result of the corresponding re-examination routine from the airport is automatically received. Depending on the result of the re-examination, either a confirmation to the at least one IT system of the airport is automatically provided that the item of hold baggage can stay on the airplane and triggering a termination of the method is accomplished or information to the at least one IT system of the airport is automatically provided that the at least one specific item of hold baggage needs to be off loaded from the airplane and triggering a termination of the method is accomplished. The presented method provides all necessary connections between relevant airport's subsystems respectively relevant IT systems of the airport so that an automated re-examination of unaccompanied hold baggage can be performed on a timely manner and complying with the European legislation. Such subsystems may be, for example, DCS system (DCS = Departure control system), HBS system (HBS = Hold Baggage screening system), AODB system (AODB = Airport operational database), BHS system (BHS = Baggage handling system) or equivalent systems. For example, the assignment routine may be such that the presence of two BSM (BSM = baggage source message) of the item of hold baggage to be examined already gives the signal to unload. Otherwise the method will be continued with the subsequent routine as described in the claims. With this method, the airline company can maintain the bag in the aircraft in case of a positive evaluation (non-suspicious) of the specific item of hold baggage. Assuring that the risk level is mitigated and all the legal requirements are met, this new possibility can represent a significant saving in terms of operational costs and a substantial reduction of flight delays due to unnecessary baggage unloading. This new solution represents a significant improvement for the current process, as this option is not available, either on a manual or automated process. With the application to be deployed, a new process will be included in the passenger-baggage reconciliation process. The application respectively the method will interface with several subsystems currently being used within airports, in order to run the above-mentioned workflow, to conduct the re-examination of unaccompanied hold baggage and automatically inform the airlines about this status (OK/Not OK to travel), which allows for a final decision, whether to maintain or unload the baggage from the airplane. The presented method leads to benefits as it can be expected to reduce operational costs from airlines. These cost savings can be direct in the sense of avoiding unnecessary actions in connection with unaccompanied baggages or indirect in the sense of avoiding undesired delays caused by unnecessary off loading operations of unaccompanied baggages. Therefore, as an additional benefit, the method will provide a better service to the flight passenger. Departing flights can have a more reliable estimation of time to departure, which helps improving airline's fleet efficiency and provide a better passenger service by keeping them less time inside the airplane waiting for hold baggage to be unloaded. Furthermore, by cutting on flight delays, airlines can greatly reduce their expenses with staff, airport fees, fuel, assets 'underutilization, and more crucially with passenger costs (for example compensations, losing the customer to the competition, bad reputation et cetera). In addition, airports can have this solution on their services" portfolio and therefore can offer this method to the customers. This solution can provide the above-mentioned benefits for airlines, which allows airports to have a new value-added service for their clients, thus raising their attractiveness and competitiveness. Moreover, this solution would allow airport's operations (for example infrastructure, ground handling et cetera) to keep the overall scheduled operations on time with the planning, thus raising the global airport operations' efficiency and lowering chain reaction costs. This would also contribute to a leaner and seamless airport's experience for the passengers, without setbacks or stressful situations. In line with the aforementioned advantages, ground-handling teams can also have great benefits for their operations. Given that their operation's planning is intrinsically dependent of flights' scheduled time of departure (STD = scheduled time of departure) and estimated time of departure (ETD = estimated time of departure), if there's an offset from these reference times, ground handling operations are strongly impacted, especially on resources" allocation. As such, this solution will allow a tighter flight compliance with these times, helping ground handling teams to manage their operations more fluently and without additional unexpected costs due to the operations connected to unnecessary movement of unaccompanied baggages. Consequently, if the presented method will be used, hold baggage with accepted conditions to travel unaccompanied will not be unloaded unnecessarily, so that undesired delays can be avoided, which otherwise would propagated in to every air industry stakeholders" operations and subsequently cause large additional costs.

Furthermore, according to the invention, a system for re-examination of unaccompanied hold baggage is made available, which comprises at least one processing unit designed to run a method according to the claims 1 to 9 and which comprises at least one interface wherein the at least one interface is designed to interact with at least one IT system of the airport. The advantages mentioned above apply insofar as transferable also for the presented system.

Furthermore, according to the invention, the use of the system of claims 8 and 9 for carrying out the method according to claims 1 to 7 is made available. The advantages mentioned above apply insofar as transferable also for the presented system.

Furthermore, in a preferred embodiment of the invention it is provided that the at least one IT system of the airport comprises at least the functionality of the following IT systems: DCS system (DCS = Departure control system), HBS system (HBS = Hold Baggage screening system), AODB system (AODB = Airport operational database), BHS system (BHS = Baggage handling system). The interaction with the airline's DCS system allows to receive the airline's requests and to return the respective re-evaluation results. This can be performed for example through baggage LPN (LPN = License plate number) and flight ID (ID = Identification). The interaction with the HBS system allows for example to request the baggage re-evaluation on the necessary number of security workstations for the LPN provided. Furthermore, the re-evaluation results can be received. The interaction with airport operational database allows for example to request flight information, which is related to the LPN and flight ID, wherein this time, these details are provided from the system for re-examination of unaccompanied baggage during the execution of the method. The interaction with the baggage handling system allows for example to request for the validation of a possible duplicated BSM (BSM = baggage source message) related to the LPN and flight ID, wherein this time, these details are provided from the system for re-examination of unaccompanied baggage during the execution of the method. The above-mentioned specifications of the method thus allow an even faster and more efficient approach to the procedure with unaccompanied hold baggage, so that costs can be saved in a particularly advantageous manner, which would otherwise be incurred additionally.

In a further preferred embodiment of the invention, it is provided that at least four individual digital interfaces of the system are operated to enable a respective individual interaction with the following four systems: DCS system (DCS = Departure control system), HBS system (HBS = Hold Baggage screening system), AODB system (AODB = Airport operational database), BHS system (BHS = Baggage handling system). The interaction with the airline's DCS system allows for example to receive the airline's requests and to return the respective re-evaluation results. This can be performed for example through baggage LPN (LPN = License plate number) and flight ID (ID = Identification). The interaction with the HBS system allows for example to request the baggage re-evaluation on the necessary number of security workstations for the LPN provided. Furthermore, the re-evaluation results can be received. The interaction with airport operational database allows for example to request flight information, which is related to the LPN and flight ID, wherein this time, these details are provided from the system for re-examination of unaccompanied baggage during the execution of the method. The interaction with the baggage handling system allows for example to request for the validation of a possible duplicated BSM (BSM = baggage source message) related to the LPN and flight ID, wherein this time, these details are provided from the system for re-examination of unaccompanied baggage during the execution of the method. In this embodiment, each interface is intended to be IT system agnostic in order to be possible to scale out from only some specific IT system providers to any system with similar functionalities where during the several steps of the method all necessary information are retrieved for its purposes. The above-mentioned alternative specifications of the method thus allow an even faster and more efficient approach to the procedure with unaccompanied hold baggage, so that costs can be saved in a particularly advantageous manner, which would otherwise be incurred additionally.

In a further preferred embodiment of the invention, it is provided that the assignment routine comprises the step of checking whether the respective item of hold baggage has only one BSM (BSM = Baggage source message). The interaction with the baggage handling system allows for example to request for the validation of a possible duplicated BSM (BSM = baggage source message) related to the LPN (LPN = License plate number) and flight ID, wherein this time, these details are provided from the system for re-examination of unaccompanied baggage during the execution of the method. In other words, the presented method can be used in such a way that previously available single information for an automated routine can be used in the evaluation of unaccompanied baggage in relation to each other. Since all individual informations are automated due to the use of the method in conjunction with the associated system and reorganized and prepared in a scheduled routine, a significant acceleration of the necessary operations in the sense of an assessment of unaccompanied baggage can be achieved.

In a further preferred embodiment of the invention, it is provided that the at least one information attribute comprises at least one screening image of the at least one specific item of hold baggage. The respective screening images of the individual items of hold baggage created during baggage handling are not only requested by the method and associated system, but are also appropriately re-evaluated using an automated routine so as to comply with the procedures required by the above-mentioned Directive. In this respect, this particular embodiment is predestined to provide an even faster and more efficient approach with unaccompanied baggage to meet a re-evaluation in the sense of the legal requirements.

In a further preferred embodiment of the invention, it is provided that the re-examination routine comprises at least one step of re-evaluation of the at least one screening image of the at least one specific item of hold baggage. This re-evaluation of the at least one screening image of the at least one specific item of hold baggage is carried out by the respective responsible persons of the respective airport.
But the proposed method and the according system support an automated routine to ensure an efficient, low-cost process. In particular, providing of the screening images can be carried out in such a way that at least partial preparation of this information is carried out before the actual providing. It is conceivable that even individual details of the image are separately provided in an enlarged view. It is also conceivable that an additional input mask will be provided for the re-evaluation, so that the persons involved will be supported in this case for fast and efficient processing. Although the method itself cannot carry out the actual re-evaluation step on the basis of legal regulations, it can at least provide means and separate processing steps within the method and the associated system, which support the legally required steps.

In a further preferred embodiment of the invention, it is provided that a subroutine is performed to monitoring, control and provide reporting on the end-to-end process of the re-examination of unaccompanied hold baggage in an airplane. This additional feature can help to provide meaningful and efficient documentation of the above steps so that additional customer value can be generated here.

In a further preferred embodiment of the invention, it is provided that the system comprises means for processing screening images. For example, these means could be based wholly or at least partially based on image processing routines. Also, additional image planes could be provided to allow additional information input at a later time. A basic component of these means could simply be designed to receive and re-send one or more image files in a user-defined manner. In this case, the user-defined manner can be based on the valid regulations of the current legislation and can be designed to implement future supplementary requests, at least partially providing a user-defined adaptation routine in the form of an input mask.

The above-described characteristics, features, and advantages of this invention, as well as the manner in which they are achieved, will become clearer and more clearly understood in connection with the following description of the embodiments, which will be described in detail in conjunction with the drawings. In these drawings:
- FIG. 1: shows a process flow diagram of a method for an automated re-examination of unaccompanied hold baggage,
- FIG. 2: shows a schematic representation of a system for re-examination of unaccompanied baggage.

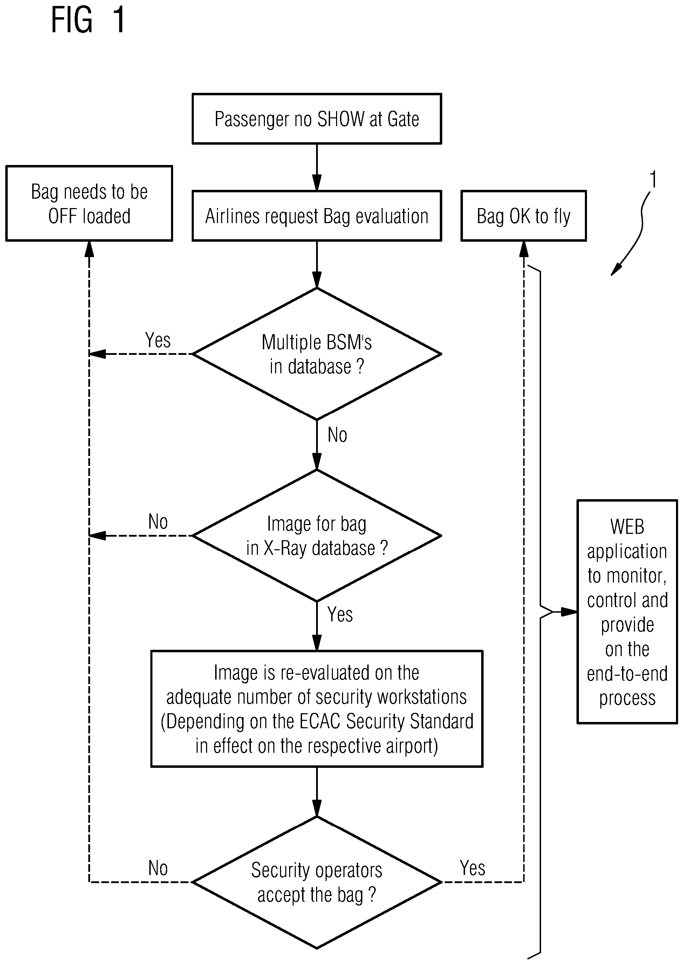

FIG. 1 shows a process flow diagram 1 of a method for an automated re-examination of unaccompanied hold baggage. This process flow diagram 1 shows a possible variant of the method, whereby it is conceivable that further sub-variants or generally other variants within the meaning of the scope of the claims and the intellectual structure of the invention can be provided.

The pre-process will start at the boarding gate when the airline's staff requests for passenger cancellation. Accordingly, the company will check the passenger's risk profile in their profile evaluation system. If the passenger's profile is below the defined threshold of risk, the airline system requests the passenger's hold baggage re-examination. Conversely, high-risk profiles are immediately refused and their hold baggage is unloaded (the passenger profile evaluation by the company is not part of the method respectively the application).

One of the first steps performed by the method is to confirm with the BHS' High-level Controller (HLC = High-level Controller) or equivalent if there is more than one baggage on the system with the same BSM (BSM = baggage source message). This step can be seen as an essential part of an assignment routine. It is necessary to perform this step because, if there are two equal BSMs on the BHS database, it is not possible to retrieve the specific screening images of the intended baggage to be re-evaluated. If there are not repeated BSM's on the database, a confirmation is sent from HLC (HLC = High-level Controller) to the method. This triggers a new request from the method to the Hold Baggage Screening (HBS = Hold Baggage Screening) server to initiate a re-evaluation of the hold baggage's screening images. Subsequently, the security operators perform the necessary re-evaluation. If there are only positive evaluations (no-suspicious bag), a positive result is sent to the airline's Departure control system (DCS = Departure control system), informing the airline that the hold baggage is good to travel unaccompanied. If there is at least one negative evaluation, the application will send a negative result to the airline's Departure control system (DCS = Departure control system), informing the airline that the hold baggage is not cleared to travel unaccompanied, so that they can communicate it to the ground handler to unload the specific item of hold baggage.

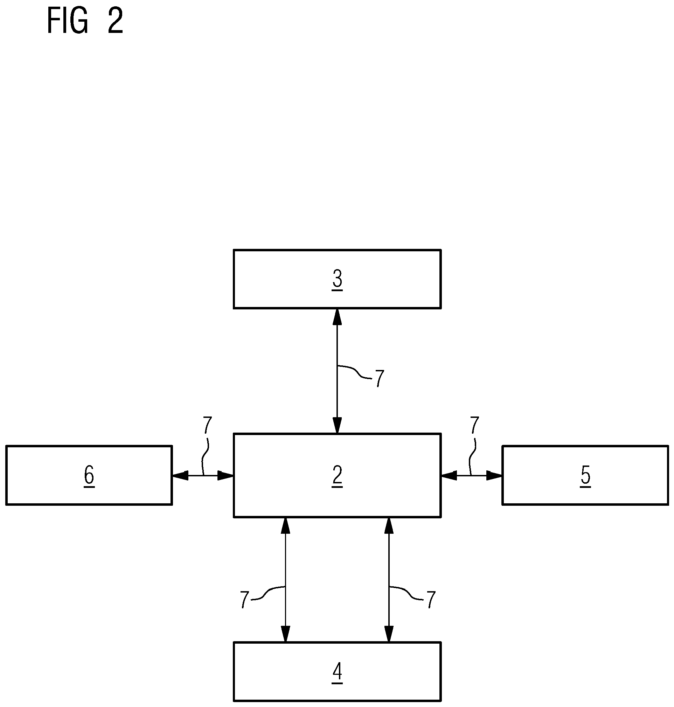

FIG. 2 shows a schematic representation of a system 2 for re-examination of unaccompanied hold baggage. The system 2, although not particularly illustrated in detail, may include, for example, the following features, not further illustrated: At least one processing unit designed to run a method according to the claims 1 to 9 and at least one interface wherein the at least one interface is designed to interact with at least one IT system of the airport. The system 2 shown in FIG. 2 could for example comprise four independent interfaces which are designed to act separately with the following four IT systems from the airport: DCS system 3 (DCS = Departure control system), HBS system 4 (HBS = Hold Baggage screening system), AODB system 5 (AODB = Airport operational database), BHS system 6 (BHS = Baggage handling system). However, it is also conceivable that only one interface is provided, which is designed to interact with the respective aforementioned IT systems of the airport. In other words, such a superordinate interface can have respective sub-interfaces, which respectively allow to carry out a user-defined exchange of information between the system 2 and the IT systems of the airport. This can also be done automatically. Respective input triggers a corresponding subsequent action(s) or follow-up action(s). In FIG. 2 respective double arrows 7 show this interaction between the system 2 and the IT systems of the airport. Furthermore, the system 2 can comprise means for processing screening images, which are also not further shown in more detail.

While the invention has been further illustrated and described in detail by way of preferred embodiments, the invention is not limited by the disclosed examples, and other variations can be derived therefrom by those skilled in the art without departing from the scope of the invention.

### Reference signs

- 1: process flow diagram of a method for an automated re-examination of unaccompanied hold baggages
- 2: system for re-examination of unaccompanied baggage
- 3: DCS system (DCS = Departure control system)
- 4: HBS system (HBS = Hold Baggage screening system)
- 5: AODB system (AODB = Airport operational database)
- 6: BHS system (BHS = Baggage handling system)
- 7: double arrow

## Claims

1. Method for an automated re-examination of unaccompanied hold baggage in an airplane comprising the following steps:
• Activating a system (2) for re-examination of unaccompanied hold baggage in an airplane;
• Operate at least one digital interface of the system (2), which allows an interaction from the system (2) with at least one IT system of the airport;
• Receipt of request of a re-examination over at least one specific item of hold baggage from the at least one IT system of the airport;
• Triggering automatically an assignment routine over the at least one specific item of hold baggage at the at least one IT system of the airport;
• Receiving automatically a result from the assignment routine;
• Depending on the result of the assignment routine: triggering a request over at least one information attribute of the specific item of hold baggage to the at least one IT system of the airport or providing an information to the at least one IT system of the airport that the at least one specific item of hold baggage needs to be off loaded from the airplane and triggering a termination of the method is accomplished;
• Receiving the at least one information attribute of the item of hold baggage and automatically providing it to a corresponding re-examination routine from the airport;
• Automatically receiving a result of the corresponding re-examination routine from the airport;
• Depending on the result of the re-examination: providing automatically confirmation to the at least one IT system of the airport that the item of hold baggage can stay on the airplane and triggering a termination of the method is accomplished or providing information to the at least one IT system of the airport that the at least one specific item of hold baggage needs to be off loaded from the airplane and triggering a termination of the method is accomplished.

2. Method according to claim 1, wherein the at least one IT system of the airport comprises at least the functionality of the following IT systems:
• DCS system (3) (DCS = Departure control system);
• HBS system (4) (HBS = Hold Baggage screening system);
• AODB system (5) (AODB = Airport operational database);
• BHS system (6) (BHS = Baggage handling system).

3. Method according to claim 1, wherein at least four individual digital interfaces of the system (2) are operated to enable a respective individual interaction with the following four systems:
• DCS system (3) (DCS = Departure control system);
• HBS system (4) (HBS = Hold Baggage screening system);
• AODB system (5) (AODB = Airport operational database);
• BHS system (6) (BHS = Baggage handling system).

4. Method according to one of the preceding claims, wherein the assignment routine comprises the step of checking whether the respective item of hold baggage has only one BSM (BSM = Baggage source message).

5. Method according to one of the preceding claims, wherein the at least one information attribute comprises at least one screening image of the at least one specific item of hold baggage.

6. Method according to one of the preceding claims, wherein the re-examination routine comprises at least one step of re-evaluation of the at least one screening image of the at least one specific item of hold baggage.

7. Method according to one of the preceding claims, wherein while performing the method, a subroutine is performed to monitor, control and provide reporting on the end-to-end process of the re-examination of unaccompanied hold baggage in an airplane.

8. System (2) for re-examination of unaccompanied hold baggage comprising:
• at least one processing unit designed to run a method according to the claims 1 to 9;
• at least one interface wherein the at least one interface is designed to interact with at least one IT system of the airport.

9. System (2) according to claim 8, wherein the system (2) comprises means for processing screening images.

10. Use of the system (2) of claims 8 and 9 for carrying out the method according to claims 1 to 7.
